# EUROPÄISCHE PATENTSCHRIFT

(11) **EP 1 012 636 B1**
(45) Veröffentlichungstag und Bekanntmachung des Hinweises auf die Patenterteilung: **02.01.2002**
(21) Anmeldenummer: 99929258.4
(22) Anmeldetag: 09.06.1999
(51) Int. Cl.: G02B 3/00, G02B 27/22

(54) **ANORDNUNG ZUR DREIDIMENSIONALEN DARSTELLUNG**
THREE-DIMENSIONAL REPRESENTATION SYSTEM
SYSTEME POUR REPRESENTATION EN TROIS DIMENSIONS

(30) Priorität: 12.06.1998 DE 19825950
(43) Veröffentlichungstag der Anmeldung: 28.06.2000
(73) Patentinhaber: 4D-Vision GmbH, 07749 Jena (DE)
(72) Erfinder: GRASNICK, Armin, D-07743 Jena (DE)
(74) Vertreter: Niestroy, Manfred
(86) Internationale Anmeldenummer: EP9904203
(87) Internationale Veröffentlichungsnummer: WO9966356

(56) Entgegenhaltungen:
- US-A- 5 074 649
- US-A- 5 471 881
- PATENT ABSTRACTS OF JAPAN vol. 11, no. 280 (E-539), 10. September 1987 (1987-09-10) & JP 62 077794 A (CONY CORP.), 9. April 1987 (1987-04-09) in der Anmeldung erwähnt
- N.N.: "Light diffuser with controlled divergence" IBM TECHNICAL DISCLOSURE BULLETIN., Bd. 29, Nr. 1, Juni 1986 (1986-06), Seiten 276-279, XP002122049 IBM CORP. NEW YORK., US ISSN: 0018-8689

## Beschreibung

### Gebiet der Erfindung

Die Erfindung bezieht sich auf eine Anordnung zur dreidimensionalen Darstellung von Szenen und/oder Gegenständen auf der Grundlage von ebenen Schichtbildern, die aus verschiedenen in der räumlichen Tiefe der Szenen und/oder Gegenstände gestaffelten Abbildungsebenen gewonnen wurden.

### Stand der Technik

Die im Stand der Technik bekannten Verfahrensweisen und Anordnungen zur räumlichen Darstellung von Objekten lassen sich prinzipiell drei Gruppen zuordnen. In einer ersten Gruppe wird von zwei Bildern, die unter verschiedenen Blickwinkeln aufgenommen worden sind, jeweils eines einem Auge zugeordnet. Durch geeignete Hilfsmittel wird für jedes Auge die Sicht auf das ihm zugeordnete Bild freigegeben, die Sicht auf das andere Bild aber für dieses Auge versperrt. Die Hilfsmittel, die dafür sorgen, daß jedes Auge nur das ihm zugeordnete Bild sieht, sind beispielsweise Rot-Grün-Brillen, Polarisationsbrillen u.a.

Auch kann durch entsprechend angeordnete Linsen- oder Prismenraster, wie Splitt-Image-Displays, die das Bild "aufsplitten", erreicht werden, daß jedem Auge nur das zugeordnete Bild angeboten wird.

*In US 5,477,881 ist eine Anordnung zur dreidimensionalen Darstellung von Gegenständen bzw. auch Temperaturskalen mit Hilfe von Lentikularen beschrieben. Hier werden zwei ebene Schichtbilder, von denen jedes Bildinformation des Gegenstandes aus unterschiedlichen in räumlicher Tiefe gestaffelten Abbildungsebenen beinhaltet,* *einem Betrachter präsentiert, wobei zwischen den Schichtbildern und dem Betrachter eine Vielzahl von parallel zueinander ausgerichteten Zylinderlinsen ein- und derselben Brennweite angeordnet sind. Es wird hierbei insbesondere für den Betrachter möglich, aus unterschiedlichen Betrachtungswinkeln verschiedene Temperaturskalen zu sehen.*

Nachteilig hierbei allerdings ist die Tatsache, daß Betrachtungspositionen und Betrachtungsabstand in der Regel fest vorgegeben sind und keine Akkomodationsmöglichkeit für das Auge besteht. Dadurch führt längeres Betrachten der auf diese Weise erzielten räumlichen Darstellung zu Ermüdungserscheinungen. Außerdem sind die zur Betrachtung erforderlichen Hilfsmittel zum Teil recht aufwendig, was Kosten zur Folge hat.

In einer zweiten Gruppe der aus dem Stand der Technik bekannten Anordnungen wird die räumliche Darstellung erzielt, indem das Bild und/oder die Projektion des Bildes ein Volumen ausfüllt. Hier besteht.ein wesentlicher Nachteil darin, daß mechanisch bewegte Baugruppen erforderlich sind, die dazu dienen, Bilder in unterschiedliche Tiefen des Raumes zu projizieren, wie beispielsweise rotierende Scheiben in einer Kathodenkugel, rotierende LED-Flächen oder eine rotierende Helix. Das hat einen recht hohen Bedarf an Material und Zeit zur Folge und führt so zu unerwünschten Kosten, da einmal Fertigungspräzision für die exakt zu führenden bewegten Baugruppen notwendig ist, zum anderen derartige Konstruktionen auch dem Verschleiß unterliegen, woraus sich erhöhter Wartungsaufwand ergibt.

Dieser Gruppe ist auch eine *"Dreidimensionale Anzeigevorrichtung*" nach JP 62-77794 A zuzuordnen, die aus einer Bildanzeigevorrichtung, einer Gruppe von vielen feinen konvexen Linsen mit veränderbarer Brennweite sowie einer der Gruppe feiner konvexer Linsen gegenüberstehenden weiteren konvexen Linse besteht. Als feine konvexe Linsen sind z.B. bezüglich ihrer Brennweite veranderbare Flüssigkristall-Linsen vorgesehen, an die Steuersignale gelegt werden, die auf Bildtiefeninformationen basieren. Beim Betreiben dieser Anordnung werden auf der Bildanzeigevorrichtung verschiedene zweidimensionale, namlich in horizontaler und vertikaler Richtung ausgedehnte Bilder angezeigt, die bei entsprechender Ansteuerung der Flüssigkristall-Linsen bzw. Einstellung von den Bildern zugeordneten Brennweiten durch die weitere konvexe Linse betrachtet werden konnen, wobei ein dreidimensional wahrnehmbares Bild entsteht.

Nachteilig hierbei ist allerdings der verhaltnismäßig aufwendige optischmechanische und optisch-elektronische Aufbau und die sich mit 90 cm ergebende recht große Bautiefe. Auch ist hier das Auftreten eines unerwünschten Effektes derart zu erwarten, daß das auf große Entfernungen akkomodierte Auge bevorzugt das Raster der feinen konvexen Linsen bzw. das Raster der Zwischenräume zwischen diesen Linsen sieht und nicht, wie eigentlich wünschenswert, eine ungestörte dreidimensionale Darstellung wahrnimmt. Weiterhin dürften der beabsichtigten Anwendung auf TFT-Displays (zur Miniaturisierung) Probleme entgegenstehen, z.B. aufgrund eines nicht realisierbaren Abbildungsmaßstabes des optischen Systems aus den feinen konvexen Linsen und der weiteren konvexen Linse.

Weiterhin ist in JP 07-64 020 A ein *"Dreidimensionales Display sowie Anzeigeverfahren mittels dieses Displays*" beschrieben. Damit sollen dreidimensionale bewegte Bilder schnell und einfach angezeigt und ohne Brille in einem großen Raumbereich betrachtet werden können.

Zu diesem Zweck sind mehrere, mit einer konvexen Linse kurzer Brennweite, einer Lichtquelle und einem zwischen der Linse und der Lichtquelle befindlichen Streckmechanismus ausgestattete Anzeigeelemente vorhanden und auf einer Anzeigefläche angeordnet. Ein dreidimensionales Bild wird erzeugt, indem durch Betätigung des Streckmechanismus die Distanz zwischen den konvexen Linsen und den Lichtquellen verändert wird, wodurch sich die Position des mittels der konvexen Linse entstehenden Abbildes der Lichtquelle verschiebt. Mit der gezielten Veränderung der Positionen der virtuellen und der reellen Abbilder der Lichtquellen entsteht ein dreidimensionales Bild.

Abgesehen von dem hier ebenfalls recht aufwendigen Aufbau besteht ein weiterer Nachteil darin, daß der Öffnungsfehler der bloßen konvexen Linsen nicht korrigiert ist, weswegen die Güte der Abbildung und die Unterschiede in den Abbildungstiefen gering sind.

In einer dritten Gruppe werden Bilder in ein Volumen abgebildet. Das wird beispielsweise erzielt durch einen akustik-modulierten Hohlspiegel, computergenerierte Hologramme unter Verwendung eines akustisch-optischen Modulators oder unter Nutzung der Quecksilberdampffluoreszenz durch Infrarotanregung. Auch diese Verfahren und Anordnungen sind mit verhältnismäßig hohem Aufwand und daher mit hohen Kosten verbunden.

### Beschreibung der Erfindung

Davon ausgehend liegt der Erfindung die Aufgabe zugrunde, eine Anordnung zur dreidimensionalen Wiedergabe von Szenen und/oder Objekten zu schaffen, bei der eine projektionsflächenlose Abbildung ohne Verwendung von bewegten Baugruppen erfolgt und für den Betrachter keine zusätzlichen Hilfsmittel erforderlich sind.

Erfindungsgemäß wird die Aufgabe dadurch gelöst, daß senkrecht zur Blickrichtung eines Betrachters oder einer Kamera eine Vielzahl von nebeneinanderliegenden Abbildungselementen vorgesehen ist, wobei die Abbildungselemente in Form eines ebenen Rasters aus Zeilen und Spalten zueinander positioniert sind. Dabei weisen mindestens zwei der in einer Zeile und in einer Spalte dieses Rasters benachbarten Abbildungselemente voneinander abweichende Brennweiten auf und die Anzahl der unterschiedlichen Brennweiten entspricht der Anzahl der in der räumlichen Tiefe gestaffelten Abbildungsebenen. Weiterhin sind Abbildungselemente mit gleichen Brennweite stets denselben Abbildungsebenen zugeordnet. In der optischen Achse eines jeden Abbildungselementes ist ein Teil eines Schichtbildes positioniert, wobei im Strahlengang von Abbildungselementen gleicher Brennweite stets Teile desselben Schichtbildes vorgesehen sind.

Damit wird vorteilhaft erreicht, daß Szenen und Objekte, von denen mehrere Schichtbilder von unterschiedlichen Abbildungsebenen aufgenommen worden sind, mit einfachen Mitteln räumlich wiedergegeben werden können. Das erfolgt, indem die einzelnen Schichtbilder durch die jeweils zugeordneten Abbildungselemente in die Brennebene abgebildet werden, die ihrer Abbildungsebene entsprechen.

In einer besonderen Ausgestaltung der Erfindung kann vorgesehen sein, daß die den Abbildungselementen zugeordneten Teile der Schichtbilder in den Brennebenen der Abbildungselemente positioniert sind. Damit wird dem Auge eines Betrachters die Akkomodation erleichtert, die einzelnen Schichtbilder werden in guter Schärfe wahrgenommen und vermitteln so einen realen dreidimensionalen Eindruck des darzustellenden Objektes.

Eine gute Auflösung läßt sich erzielen, wenn die Abbildungselemente in ausreichender Anzahl über das Raster verteilt angeordnet sind. Vorteilhaft sollten dabei Abbildungselemente mit gleichen Brennweiten in gleichen Abständen zueinander positioniert sein. Für den Betrachter werden die Schichtbilder ineinander verschachtelt und dabei jedes einzelne Schichtbild in der ihm zugeordneten Abbildungsebene dargestellt; so vermitteln die zur gleichzeitigen Betrachtung angebotenen Schichtbilder einen guten räumlichen Eindruck des wiederzugebenden Objektes bzw. einer Szene.

Der wesentliche Vorteil dieser Anordnung besteht dabei darin, daß bewegte optische Elemente nicht benötigt werden. Außerdem entsteht im Gegensatz zum Stand der Technik der räumliche Eindruck auch bei Betrachtung mit nur einem Auge, d.h. mit der erfindungsgemäßen Anordnung ist es möglich, auch bei der Betrachtung mit lediglich einem Auge den Eindruck einer räumlichen Darstellung zu erzielen.

In einer bevorzugten Ausgestaltung der Erfindung ist vorgesehen, daß als Abbildungselemente Plan-Konvex-Linsen vorgesehen sind. Rasteranordnungen mit Plan-Konvex-Linsen lassen sich kostengünstig herstellen, indem die Wölbungen dieser Linsen beispielsweise der Oberfläche eines flachen transparenten Körpers aufgeprägt werden.

Selbstverständlich können aber auch Bikonvexlinsen, Fresnel-Linsen, Linsenkombinationen aus beispielsweise Konvex- und Konkavlinsen usw. in der Rasteranordnung vorgesehen sein. Ebenso ist es denkbar, zum Zweck der Verbesserung der Abbildungseigenschaften in den Strahlengang der Abbildungselemente Blenden einzuordnen oder Farbfilter vorzusehen, wodurch die einzelnen Schichtbilder für den Betrachter unterschiedlich wahrnehmbar sind.

Eine besonders bevorzugte Ausgestaltung der Erfindung sieht vor, daß Plan-Konvex-Linsen mit vier verschiedenen Brennweiten innerhalb des Rasters vorgesehen sind. jeweils vier solcher Plan-Konvex-Linsen mit zueinander unterschiedlichen Brennweiten sind geometrisch zu einer Rasterzelle zusammengefaßt, in der sie quadratisch oder wabenförmig angeordnet sind. Mehrere solcher Rasterzellen sind in Zeilen und Spalten nebeneinander angeordnet und füllen das gesamte Raster aus. Dabei sind in der Brennebene von Plan-Konvex-Linsen gleicher Brennweite stets Teile von einunddemselben von vier Schichtbildern angeordnet

Auf diese Weise ist es möglich, mit relativ einfachen und leicht herzustellenden Mitteln eine räumliche Darstellung zu erzielen, da erfahrungsgemäß bereits vier Abbildungsebenen sehr gute räumliche Eindrücke bieten. Selbstverständlich ist es in weiteren Ausgestaltungen der Erfindung möglich, optisch abbildende Elemente mit größerer Anzahl und entsprechend dieser Anzahl unterschiedlichen Brennweiten nebeneinander anzuordnen und in Rasterzellen zusammenzufassen, wodurch die Darstellung einer größeren Anzahl von Abbildungsebenen übereinander möglich ist.

In weiterer vorteilhafter Ausgestaltung der Erfindung kann vorgesehen sein, daß in jeder der Rasterzellen vier Plan-Konvex-Linsen vorgesehen sind, von denen je eine eine der Brennweiten 100mm, 85mm, 70mm und 50mm aufweist. Damit ist die Darstellung von Schichtbildern möglich, die erstens in der Tiefe mit gleichen Abständen gestaffelt sind und die zweitens einen hinreichend guten räumlichen Eindruck vermitteln.

Die Tiefenstaffelung bzw. die Anzahl der Abbildungsebenen sollte bei der Ausgestaltung der Erfindung von der Art und Weise des Objektes abhängig sein. Das dreidimensional betrachtet werden soll. Bei der Darstellung von rauhen Oberflächen, bei denen die räumliche Tiefe recht gering ist, können auch die Abstände bei der Tiefenstaffelung relativ gering gehalten werden. Bei Objekten größerer räumlicher Tiefe dagegen sind höhere Anzahlen von Abbildungsebenen und insofern auch Abbildungselemente in einer hoheren Anzahl verschiedener Brennweiten empfehlenswert.

Weiterhin kann die Erfindung in der Weise ausgestaltet sein, daß jede der Plan-Konvex-Linsen einen Durchmesser von 1 Millimeter aufweist und jeweils 100 Rasterzellen mit vier Plan-Konvex-Linsen in jeder Zeile und jeweils 100 Rasterzellen mit vier Plan-Konvex-Linsen in jeder Spalte angeordnet sind. Damit wird eine sehr gute Auflösung bei der dreidimensionalen Wiedergabe der Schichtbilder erzielt.

Die Gewinnung der Schichtbilder kann nach den im Stand der Technik bekannten Verfahren erfolgen, wie beispielsweise beschrieben in der DE Offenlegungsschrift 29 11 375. Dabei ist die Bedingung zu erfüllen, daß die einzelnen Schichtbilder jeweils einer der mit der erfindungsgemäßen Anordnung darstellbaren Abbildungsebene entsprechen. jedes Schichtbild wird dann in eine Anzahl Teile zerlegt, die der Anzahl der Abbildungselemente gleicher Brennweite entspricht. Jedes dieser Teile wird einem der Abbildungselemente zugeordnet und in der Brennebene des betreffenden Abbildungselementes positioniert.

Ergänzend zu den dargestellten Ausführungsformen und -varianten der Erfindung ist es denkbar, die einzelnen Abbildungselemente bzw. Linsen in zueinander unterschiedlichen Durchmessern auszuführen. Andererseits ist es auch möglich, die einzelnen Schichtbilder in unterschiedlichen Maßstäben darzustellen, wodurch ein Ausgleich der unterschiedlichen Vergrößerungen erfolgt.

Im Rahmen der Erfindung liegt es außerdem, die Abbildungselemente, die einer gemeinsamen Abbildungsebene bzw. einem Schichtbild zugeordnet sind, mit der Brennweite "unendlich" auszuführen. Damit wird erreicht, daß für den Betrachter dieTeile des entsprechenden Schichtbildes im Maßstab 1:1 wahrnehmbar sind.

### Kurze Beschreibung der Zeichnungen

Die Erfindung soll nachfolgend anhand eines Ausführungsbeispieles näher erläutert werden. In den zugehörigen Zeichnungen zeigen
- Fig. 1: die prinzipielle Darstellung eines Bildfeldes mit der erfindungsgemaßen Anordnung von optisch abbildenden Elementen.
- Fig. 2: einen Schnitt AA aus Fig.1 bei Anordnung der Teilbilder in der Brennebene
- Fig. 3: einen Schnitt BB aus Fig.1 bei Anordnung der Teilbilder in der Brennebene
- Fig. 4: den Schnitt AA aus Fig.1 bei Anordnung der Teilbilder außerhalb der Brennebene
- Fig.5: den Schnitt BB aus Fig.1 bei Anordnung der Teilbilder außerhalb der Brennebene

### Ausführliche Beschreibung der Zeichnungen

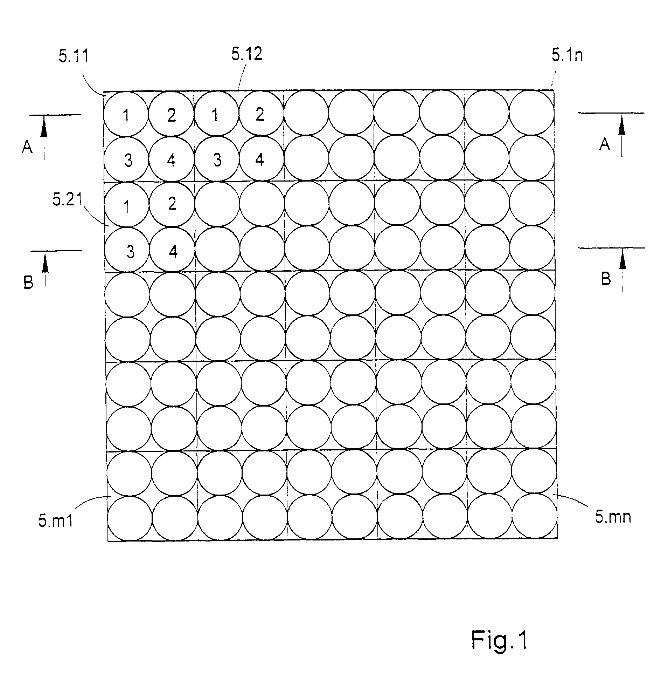

In Fig.1 ist eine Vielzahl von Abbildungselementen 1,2,3,4, die in Zeilen und Spalten innerhalb eines ebenen Rasters 5 nebeneinander liegen, vorgesehen. Die Abbildungselemente 1 bis 4 sind beispielhaft Plan-Konvex-Linsen. Alle Abbildungselemente mit der Bezeichnung 1 haben dieselbe Brennweite, ebenso alle Abbildungselemente mit den Bezeichnungen 2,3 und 4. Die Brennweite der Abbildungselemente mit der Bezeichnung 1 ist jedoch von der Brennweite der Abbildungselemente mit der Bezeichnung 2 verschieden. Ebenso weichen die Brennweiten der Abbildungselemente 3 und 4 voneinander ab usw.

So haben beispielsweise die Abbildungselemente 1 die Brennweite 70mm, die Abbildungselemente 3 die Brennweite 100mm, die Abbildungselemente 2 die Brennweite 50mm und die Abbildungselemente 4 die Brennweite 85mm.

In Fig.1 ist weiterhin zu erkennen, daß jeweils eines der Abbildungselemente 1, 2, 3, 4 zu einer Rasterzelle 5.mn zusammengefaßt sind. Die Rasterzellen 5.11, 5.12 .. 5.1n sind dabei jeweils in einer Zeile, die Rasterzellen 5.11, 5.21 ... 5.ml in einer Spalte angeordnet.

Außerdem ist zu erkennen, daß die aufeinander bezogene Lage der einzelnen Abbildungselemente 1, 2, 3, 4 in jeder Rasterzelle 5.11 - 5.mn gleich ist. Das heißt, die Abbildungselemente 1 und 2 liegen jeweils in einer ersten Zeile nebeneinander, während die Abbildungselemente 3 und 4 in der nachfolgenden Zeile nebeneinander liegen, In einer ersten Spalte sind jeweils die Abbildungselemente 1 und 3 benachbart, in der nachfolgenden Spalte jeweils die Abbildungselemente 2 und 4.

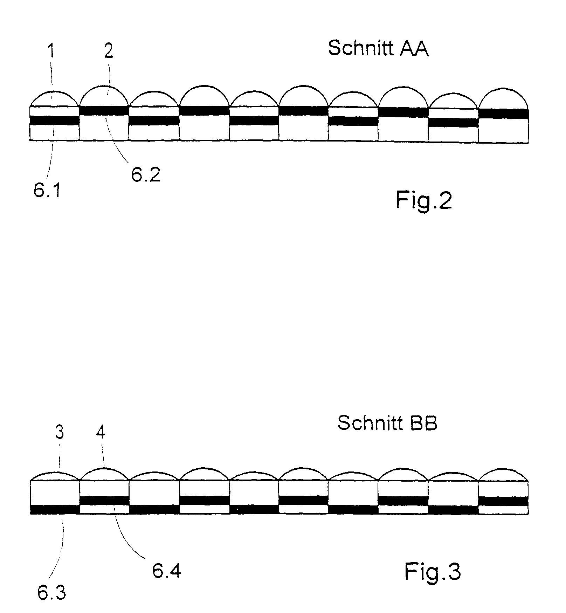

Die Darstellung in Fig.2 entspricht prinzipiell dem Schnitt AA aus Fig.1. Die unterschiedlichen Brennweiten der Abbildungselemente 1 und 2 sind durch unterschiedliche Krümmungen an deren Oberfläche dargestellt. In Fig.2 ist weiterhin zu erkennen, daß den Abbildungselementen mit unterschiedlichen Brennweiten unterschiedliche Teile 6 eines Schichtbildes zugeordnet sind. So sind beispielhaft den Abbildungselementen 1 Teile des Schichtbildes 6.1 zugeordnet, den Abbildungselementen 2 sind Teile eines Schichtbildes 6.2 zugeordnet.

Eine analoge Darstellung ist der Fig.3 zu entnehmen, in der zu erkennen ist, daß den Abbildungselementen 3 Teile eines Schichtbildes 6.3 und den Abbildungselementen 4 Teile eines Schichtbildes 6.4 zugeordnet sind.

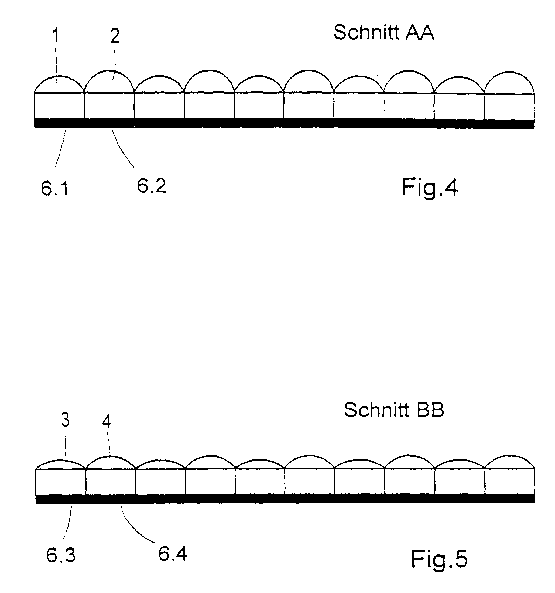

In Fig.2 und Fig.3 sind die Teilbilder 6.1 bis 6.4 beispielhaft in der jeweiligen Brennebene des jeweils zugeordneten Abbildungselementes 1 bis 4 angeordnet. Dagegen zeigen die Fig.4 und die Fig.5 eine Ausgestaltung der Erfindung, bei der die Teilbilder 6.1 bis 6.4 nicht in den Brennebenen der Abbildungselemente 1 bis 4, sondern auf einer gemeinsamen ebenen Fläche angeordnet sind. Hieraus ergeben sich technologisch günstige Voraussetzungen für das Drucken der Teilbilder auf einen physikalischen Trager.

Anhand dieser Darstellungen wird deutlich, daß unter Abbildungselementen gleicher Brennweite stets Teile desselben Schichtbildes angeordnet sind. Damit obliegt jedem Abbildungselement 1, 2, 3, 4 die Funktion, den ihm zugeordneten Teil eines Schichtbildes in eine gesonderte Abbildungsebene abzubilden.

Betrachtet man nun das Raster mit Blick auf die Abbildungselemente 1 bis 4 gleichzeitig, so werden vom Betrachter alle Abbildungsebenen wahrgenommen, wobei das Auge jedoch in Abhängigkeit von den unterschiedlichen Brennebenen in verschiedene Abbildungsebenen focussiert. Damit wird jedes Teil bzw. jedes Schichtbild in der ihm zugeordneten räumlichen Tiefe dargestellt. Damit lassen sich Objekte dreidimensional darstellen, wobei die Auflösung in der Tiefe von der Anzahl der Abbildungsebenen abhängig ist.

## Patentansprüche

1. Anordnung zur dreidimensionalen Darstellung von Szenen und/oder von Gegenständen auf der Grundlage von ebenen Schichtbildern, die verschiedene in der räumlichen Tiefe gestaffelte Abbildungsebenen der Szenen und/oder der Gegenstände wiedergeben, bei der
- senkrecht zu einer optischen Achse, die in der Blickrichtung eines Betrachters oder einer Kamera ausgerichtet ist, eine Vielzahl von Abbildungselementen (1,2,3,4) fester Brennweiten vorgesehen sind, mittels derer die Schichtbilder betrachtet bzw. aufgenommen werden können und in der optischen Achse eines jeden Abbildungselementes (1,2,3,4) ein Teil eines Schichtbildes angeordnet ist,
**dadurch gekennzeichnet, daß**
- die Vielzahl der Abbildungselemente (1,2,3,4) in einem ebenen Raster aus Zeilen und Spalten nebeneinander angeordnet sind und
- mindestens zwei der in einer Zeile und/oder in einer Spalte dieses Rasters nebeneinanderliegenden Abbildungselemente (1,2,3,4) voneinander abweichende Brennweiten aufweisen,
- wobei die Anzahl der Abbildungselemente (1,2,3,4) mit unterschiedlichen Brennweiten der Anzahl der in der räumlichen Tiefe gestaffelten Abbildungsebenen entspricht
- und wobei Abbildungselemente (1,2,3,4) gleicher Brennweite stets denselben Abbildungsebenen und Abbildungselementen (1,2,3,4) gleicher Brennweite stets Teile (6.1,6.2,6.3,6.4) desselben Schichtbildes zugeordnet sind.

2. Anordnung nach Anspruch 1, bei der die den Abbildungselementen zugeordneten Teile (6.1,6.2,6.3,6.4) der Schichtbilder in den Brennebenen der Abbildungselemente positioniert sind.

3. Anordnung nach einem der vorgenannten Ansprüche, bei der als Abbildungselemente (1,2,3,4) Linsen mit sphärischer und/oder asphärischer optisch wirksamer Fläche, bevorzugt Plan-Konvex-Linsen, vorgesehen sind.

4. Anordnung nach einem der vorgenannten Ansprüche, bei der
- als Abbildungselemente (1,2,3,4) Plan-Konvex-Linsen mit vier verschiedenen Brennweiten vorgesehen sind,
- jeweils vier Plan-Konvex-Linsen mit verschiedenen Brennweiten zu einer wabenförmigen Rasterzelle zusammengefaßt sind,
- mehrere solcher Rasterzellen, das gesamte Raster füllend, nebeneinander angeordnet sind und
- eine Anzahl von vier Schichtbildern vorgesehen ist, deren Teile (6.1,6.2,6.3,6.4) in den Brennebenen der zugeordneten Plan-Konvex-Linsen angeordnet sind.

5. Anordnung nach Anspruch 4, bei der in jeder Rasterzelle je eine kreisrunde Plan-Konvex-Linse der Brennweiten 100mm, 85mm, 70mm und 50mm vorgesehen ist.

6. Anordnung nach Anspruch 5, bei der die Plan-Konvex-Linsen auf eine gemeinsame Folie aufgebracht sind, jede der Konvexlinsen einen Durchmesser von 1 mm aufweist und jeweils 100 Rasterzellen mit je vier Plan-Konvex-Linsen in jeder Zeile und jeweils 100 Rasterzellen mit je vier Plan-Konvex-Linsen in jeder Spalte angeordnet sind.

## Claims

1. Arrangement for three-dimensional presentation of scenes and/or of objects on the basis of planar layered images which reproduce various imaging planes, which are staggered in the spatial depth, of the scenes and/or the objects, in which
- perpendicular to an optical axis which is aligned in the line of vision of an observer or of a camera a plurality of imaging elements (1, 2, 3, 4) of fixed focal lengths are provided, by means of which the layered images can be observed or recorded, and a part of a layered image is disposed in the optical axis of each imaging element,
**characterised in that**
- the plurality of imaging elements (1, 2, 3, 4) are disposed adjacent to one another in a planar raster of lines and columns and
- at least two of the imaging elements (1, 2, 3, 4) which lie adjacent to one another in a line and/or in a column of this raster have focal lengths which differ from one another,
- wherein the number of imaging elements (1, 2, 3, 4) with differing focal lengths corresponds to the number of imaging planes staggered in the spatial depth,
- and wherein imaging elements (1, 2, 3, 4) of the same focal length are always associated with the same imaging planes and imaging elements (1, 2, 3, 4) of the same focal length are always associated with parts (6.1, 6.2, 6.3, 6.4) of the same layered image.

2. Arrangement as claimed in Claim 1, in which the parts (6.1, 6.2, 6.3, 6.4) of the layered images associated with the imaging elements are positioned in the focal planes of the imaging elements.

3. Arrangement as claimed in one of the aforementioned claims, in which lenses with a spherical and/or aspherical optically effective surface, preferably plano-convex lenses, are provided as imaging elements (1, 2, 3, 4).

4. Arrangement as claimed in one of the aforementioned claims, in which
- piano-convex lenses with four different focal lengths are provided as imaging elements (1, 2, 3, 4),
- in each case four plano-convex lenses with different focal lengths are combined to form a honeycomb-shaped raster cell,
- several such raster cells, filling the entire raster, are disposed adjacent to one another, and
- a number of four layered images are provided, the parts (6.1, 6.2, 6.3, 6.4) of which are disposed in the focal planes of the associated plano-convex lenses.

5. Arrangement as claimed in Claim 4, in which a circular plano-convex lens of each of the focal lengths 100 mm, 85 mm, 70 mm and 50 mm is provided in each raster cell.

6. Arrangement as claimed in Claim 5, in which the plano-convex lenses are applied to a common film, each of the convex lenses has a diameter of 1 mm and in each case 100 raster cells each with four plano-convex lenses are disposed in each line and in each case 100 raster cells each with four piano-convex lenses are disposed in each column.

## Revendications

1. Dispositif pour la représentation en trois dimensions de scènes et/ou d'objets sur la base d'images planes à couches, qui reproduisent différents plans de reproduction échelonnés dans la profondeur spatiale, des scènes et/ou des objets, dans lequel
- perpendiculairement à un axe optique, qui est orienté dans le sens d'observation d'un observateur ou d'une caméra, il est prévu un grand nombre d'éléments de reproduction (1, 2, 3, 4) de distance focale fixe, au moyen desquels les images à couches peuvent être observées ou prises et dans l'axe optique de chaque élément de reproduction (1, 2, 3, 4) est disposée une partie d'une image à couches,
**caractérisé en ce que**
- les nombreux éléments de reproduction (1, 2, 3, 4) sont disposés côte à côte dans une grille plane constituée de lignes et de colonnes, et
- au moins deux des éléments de reproduction (1, 2, 3, 4), disposés côte à côte dans une ligne et/ou une colonne de cette grille, présentent des distances focales qui diffèrent l'une de l'autre,
- le nombre d'éléments de reproduction (1, 2, 3, 4) aux distances focales différentes correspondant au nombre de plans de reproduction étagés dans la profondeur spatiale,
- et des éléments de reproduction (1, 2, 3, 4) de même distance focale étant toujours affectés aux mêmes plans de reproduction, et à des éléments de reproduction (1, 2, 3, 4) de même distance focale étant toujours affectées des parties (6;1, 6.2, 6.3, 6.4) de la même image à couches.

2. Dispositif selon la revendication 1, dans lequel les parties (6.1, 6.2, 6.3, 6.4) des images à couches, affectées aux éléments de reproduction, sont positionnées dans les plans focaux des éléments de reproduction.

3. Dispositif selon l'une des revendications précédentes, dans lequel sont prévues, comme éléments de reproduction (1, 2, 3, 4), des lentilles à surface active optiquement sphériques et/ou non sphériques, de préférence des lentilles planes-convexes.

4. Dispositif selon l'une des revendications précédentes, dans lequel
- des lentilles planes-convexes avec quatre distances focales différentes sont prévues comme éléments de reproduction (1, 2, 3, 4),
- quatre lentilles planes convexes de distance focale différente sont réunies en une cellule de grille en forme de nid d'abeille,
- plusieurs de ces cellules de grille sont disposées côte à côte et remplissent toute la grille, et
- un nombre de quatre images à couches est prévu dont les parties (6.1, 6.2, 6.3, 6.4) sont disposées dans les plans focaux des lentilles planes convexes associées.

5. Dispositif selon la revendication 4, dans lequel une lentille plane convexe circulaire de distance focale 100 mm, 85 mm, 70 mm et 50 mm, est prévue dans chaque cellule de grille.

6. Dispositif selon la revendication 5, dans lequel les lentilles planes convexes sont appliquées sur une feuille commune, chacune des lentilles convexes présente un diamètre de 1 mm et 100 cellules de grilles avec chacune quatre lentilles planes convexes sont disposées dans chaque ligne, et 100 cellules de grille avec chacune quatre lentilles planes convexes sont disposées dans chaque colonne.
